# EUROPEAN PATENT SPECIFICATION

(11) **EP 2 415 659 B1**
(45) Date of publication and mention of the grant of the patent: **03.07.2013**
(21) Application number: 11175723.3
(22) Date of filing: 28.07.2011
(51) Int. Cl.: B62J 6/02, B60Q 1/04

(54) **Headlight mounting mechanism**
Mechanismus zur Montage eines Scheinwerfers
Mécanisme de montage de phare

(30) Priority: 06.08.2010 JP 2010177807
(43) Date of publication of application: 08.02.2012
(73) Proprietor: Honda Motor Co., Ltd., Tokyo 107-8556 (JP)
(72) Inventor: Inose, Koji, Saitama, 351-0193 (JP); Mori, Kazuhiko, Saitama, 351-0193 (JP); Takimoto, Sachiko, Saitama, 351-0193 (JP); Kawasumi, Shinji, Saitama, 351-0193 (JP); Takaishi, Yusuke, Saitama, 351-0193 (JP)
(74) Representative: Beder, Jens

(56) References cited:
- JP-A- 2002 029 311
- JP-A- 2011 063 203
- US-A1- 2007 025 114
- US-A1- 2008 158 901

## Description

This invention relates to a headlight mounting mechanism for mounting a headlight an optical axis of which is adjusted and which is attached to a vehicle body.

Normally, a headlight that irradiates the front side is attached to a vehicle body of a motorcycle and others. The headlight is configured, for example, as a headlight unit including a base member provided with a light source that emits irradiating light and a reflector that reflects the irradiating light, a lens and others that transmits the irradiating light. Besides, an optical axis of the headlight is adjusted (aimed) to irradiate a prescribed position with the irradiating light and the headlight is attached to the vehicle body (for example, refer to a patent literature 1).

A conventional headlight is provided with a pivot which functions as the center of swinging in adjusting an optical axis and an optical axis adjusting part equipped with an optical axis adjustment bolt in a base member as an optical axis adjusting mechanism. When the optical axis of the headlight is adjusted, the optical axis adjustment bolt is loosened in a state in which the pivot is locked with a handlebar cover and the optical axis adjustment bolt is moved in a longitudinal direction with the pivot in the center of swinging. Hereby, the whole headlight is turned and the optical axis of the headlight is adjusted.
[Patent Literature 1] JP-A No. 2008-162519,US 2008/0158901 A1

However, as for the conventional type headlight, the optical axis adjusting mechanism (the pivot and the optical axis adjusting part) is provided to the base member (refer to the patent literature 1), high-priced material is required to be used to secure sufficient rigidity in molding the base member. If the base member is molded using low-priced material without sufficient rigidity, a problem that it is difficult to secure the rigidity of the optical axis adjusting mechanism and its circumference occurs.

Besides, as in the conventional type headlight, the optical axis adjusting mechanism (the pivot and the optical axis adjusting part) is provided to the base member, a load when the optical axis is adjusted is apt to be particularly applied to the base member in the whole headlight. Further, as the whole load applied to the headlight is applied to the pivot and the optical axis adjusting part provided to the base member after the optical axis of the headlight is adjusted, the load is particularly applied to the base member in the whole headlight as in adjusting the optical axis. Therefore, it is desired that a low-priced headlight is provided, reducing a load applied to a base member and enhancing the durability of the base member as well as the durability of the headlight.

This invention is made to settle the problem and an object is to provide a headlight mounting mechanism that enables more enhancing the durability of a headlight.

This invention according to Claim 1 is, in a headlight (10) mounting mechanism attaching a headlight (10) to a vehicle body, provided with: a light source (110); a base member (112) equipped with a reflector (124) that reflects irradiating light from the light source (110); a lens (114) which is installed in front of the base member (112) and transmits the irradiating light, and has a characteristic that the headlight (10) is provided with an optical axis adjusting mechanism (125) including: an optical axis adjusting part (126) which is provided to either of the base member (112) or the lens (114) and which adjusts an optical axis of irradiating light transmitted in the lens (114) by changing a mounting angle at which the base member (112) and the lens (114) are attached to the vehicle body; and a pivot (140) which is provided to the other of the base member (112) or the lens (114) and which functions as a base point of the mounting angle when the optical axis is adjusted.

This invention according to Claim 2 has, in the mounting mechanism according to Claim 1, a characteristic that the optical axis adjusting part (126) is provided to the base member (112), the lens (114) is made to face the front via an opening (90) by being locked with a fitting part (134) with which a body cover (76) of the vehicle body having the opening (90) at the front is provided, the pivot (140) is provided to the lens (114) and the lens is locked with a supporting part (142) with which the body cover (76) is provided.

This invention according to Claim 3 is, in the mounting mechanism according to Claim 2, a characteristic that the pivot (140) is provided with a protrusion locking part (144) locked with the supporting part (142) and a reinforcing wall (146) is formed on both sides in a vehicle width direction of the protrusion locking part (144).

This invention according to Claim 4 has, in the mounting mechanism according to Claim 3, a characteristic that the reinforcing wall (146) is formed from the front side of the protrusion locking part (144) to the rear side in a top view.

This invention according to Claim 5 has, in the mounting mechanism according to Claim 3 or 4, a characteristic that the protrusion locking part (144) is formed on a stepped part (148) protruded upward of the lens (114) and the reinforcing wall (146) is formed so as to cross a top face and the front of the stepped part (148).

This invention according to Claim 6 has, in the mounting mechanism according to Claim 5, a characteristic that a fastening member (150) that fastens the base member (112) and the lens (114) is provided to an upper part of the base member (112) and an upper part of the lens (114).

This invention according to Claim 7, in the mounting mechanism according to Claim 6, a characteristic that the fastening member (150) fastens the base member (112) and the lens (114) in the vicinity of both sides in the vehicle width direction of the protrusion locking part (144).

This invention according to Claim 8 has, in the mounting mechanism according to Claim 6, a characteristic that plural fastening members (150) are provided and fasten at least two locations of the front side and the rear side of the protrusion locking part (144).

This invention according to Claim 9 has, in the mounting mechanism according to any of Claims 3 to 5, a characteristic that the protrusion locking part (144) is provided with a bridging part (154) that couples upper parts of the two reinforcing walls (146) and a protruded piece (156) erected on the bridging part (154), the protruded piece (156) is inserted into an insertion hole (142a) formed in the supporting part (142) in a state in which the pivot (140) and the supporting part (142) are locked with each other and a part in which the bridging part (154) and the supporting part (142) are overlapped is held by a clip (158).

According to this invention disclosed in Claim 1, as the optical axis adjusting part and the pivot are formed with them respectively distributed to the base member and the lens, a load applied to the headlight can be dispersed to the base member and the lens. That is, as the load applied to the headlight is dispersed to the base member and the lens, a load applied to the base member is reduced. As a result, the durability and the rigidity of the headlight are easily secured and as the durability of the headlight can be secured even if, for example, the base member is formed by low-priced material without sufficient rigidity, the manufacturing cost of the headlight can be reduced.

In a case that both an optical axis adjusting part and a pivot are formed in a base member, an intricate and time-consuming process is required because the precision in molding of the base member is required to be enhanced and working efficiency when a headlight is manufactured is deteriorated. In the meantime, according to the above-mentioned configuration, as only either of the optical axis adjusting part or the pivot is formed in the base member, the formation of the base member is facilitated, compared with the case where both the optical axis adjusting part and the pivot are formed in the base member, working efficiency when the headlight is manufactured is enhanced, and the manufacturing cost can be more reduced.

According to this invention disclosed in Claim 2, a load applied to the base member and the lens can be securely reduced by locking the optical axis adjusting part provided to the base member to the fitting part of the body cover and fitting the pivot provided to the lens to the supporting part. Besides, when the headlight is viewed from the front side in the state in which the headlight is attached to the body cover, the lens located in front can effectively conceal the base member located at the back by forming the pivot in the lens and the base member can be prevented from being viewed via clearance between the headlight and the body cover so as to prevent fine sight from being damaged even if the clearance between the headlight and the body cover is increased by turning the headlight for the adjustment of the optical axis.

According to this invention disclosed in Claim 3, a load applied when the optical axis is adjusted can be dispersed to the protrusion locking part and the reinforcing wall owing to configuration that the protrusion locking part locked with the supporting part of the body cover is supported by the reinforcing wall and, in addition, the rigidity of the protrusion locking part can be also enhanced. Accordingly, the durability of the pivot as well as the durability of the whole headlight can be enhanced.

According to this invention disclosed in Claim 4, the protrusion locking part can be more securely supported by the reinforcing wall formed from the front side to the rear side of the protrusion locking part when, for example, vertical vibration is transmitted from the vehicle body, the vibration can be also effectively inhibited by the protrusion locking part and the reinforcing wall, and the durability of the headlight can be further enhanced.

According to this invention disclosed in Claim 5, as the rigidity of the reinforcing wall can be enhanced by forming the reinforcing wall crossing the top face and the front of the stepped part, the protrusion locking part can be further firmly supported.

According to this invention disclosed in Claim 6, the fastening member can prevent the lens and the base member from being separated by fastening the lens and the base member by the fastening member even if a load is applied in a direction in which the lens and the base member are separated by the turning of the headlight when, for example, the optical axis of the headlight is adjusted.

According to this invention disclosed in Claim 7, as the fastening member fastens the base member and the lens in the vicinity of both sides in the vehicle width direction of the protrusion locking part, the lens and the base member can be more securely prevented from being separated.

According to this invention disclosed in Claim 8, the lens and the base member can be more firmly fastened. That is, as a load that separates the lens and the base member is applied in a longitudinal direction of the headlight, the load is dispersed to each fastening member by fastening the two locations on the front side and on the rear side of the protrusion locking part by the plural fastening members and the fastening of the lens and the base member can be more secured.

According to this invention disclosed in Claim 9, as the protruded piece is inserted into the insertion hole and the part in which the bridging part and the supporting part are overlapped is held by the clip, the pivot and the supporting part are securely locked with each other. In addition, both ends of the bridging part are supported by the reinforcing walls and as a load applied to the protrusion locking part can be dispersed to the reinforcing wall in the state in which the pivot and the supporting part are locked, the durability of the pivot, in addition, the durability of the whole headlight can be more enhanced.
Fig. 1 is a schematic side view showing a scooter-type motorcycle in which headlight mounting structure according to an embodiment of this invention is built;
Fig. 2A is an enlarged side view showing primary electric equipment with a body cover of the motorcycle shown in Fig. 1 detached and Fig. 2B is a block diagram showing a relation in which the electric equipment shown in Fig. 2A is connected; Fig. 3 is an enlarged front view showing a front cover and a handlebar cover of the motorcycle shown in Fig. 1;
Fig. 4 is an enlarged side view showing the rear of the motorcycle shown in Fig. 1 and shows a state before a blinker cover is installed;
Fig. 5 is an enlarged side view showing the rear of the motorcycle shown in Fig. 1 and shows a state after the blinker cover is installed;
Fig. 6 is a perspective view showing a headlight according to this invention;
Fig. 7 is a front view showing the headlight shown in Fig. 6;
Fig. 8 is a side view showing the headlight shown in Fig. 6;
Fig. 9 is a top view showing the headlight shown in Fig. 6;
Fig. 10 is a sectional view viewed along a line X-X shown in Fig. 7 and showing a state in which the headlight is built in an opening of the handlebar cover; and
Fig. 11 is a sectional view viewed along a line XI-XI shown in Fig. 7 and showing a state in which the headlight is inserted into the opening of the handlebar cover.

A suitable embodiment of a headlight mounting mechanism according to this invention in relation to a motorcycle in which the headlight mounting mechanism is built will be described in detail, referring to the attached drawings below.

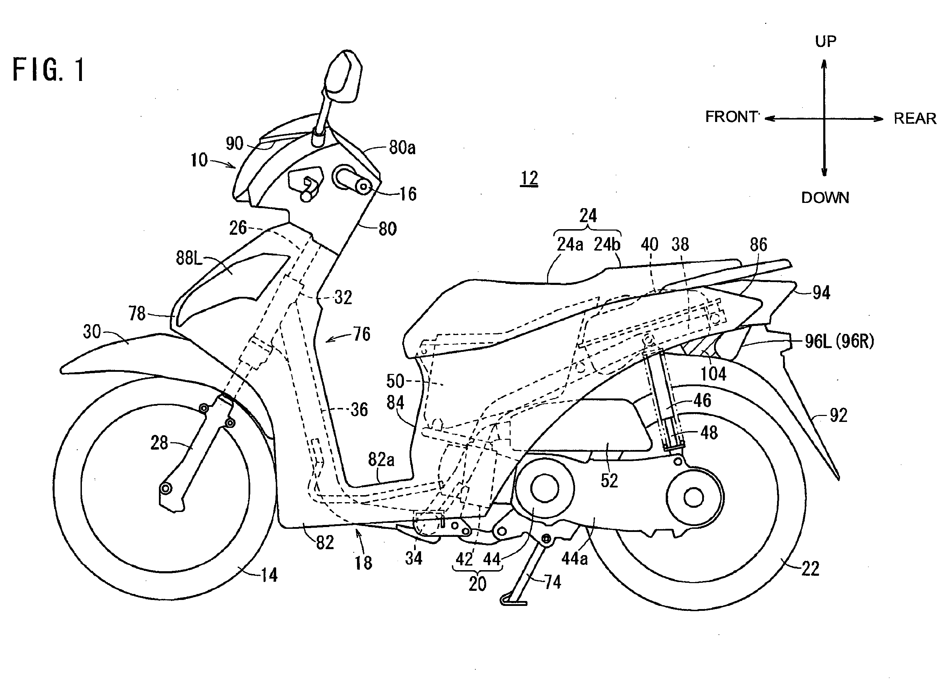

Fig. 1 is a schematic side view showing a scooter-type motorcycle (hereinafter merely called the motorcycle) 12 which is one type of a saddle-ride type vehicle in which the mechanism for mounting a headlight 10 equivalent to the embodiment of this invention is built. In this embodiment, this invention will be described using the scooter-type motorcycle 12 for an example, however, this invention is not limited to this embodiment, and it is natural that this invention can be applied to another type motorcycle or a motorbike and others. As for a mechanism and a component symmetrically provided one by one on each of the right and left sides of a vehicle body in the motorcycle 12, "L" is added to a reference numeral of left one and "R" is added to a reference numeral of right one. In the following description, to facilitate the understanding of this invention, forward, backward, upward and downward directions will be described based upon directions shown by arrows in Fig. 1 unless particularly specified, and rightward and leftward directions will be described according to directions viewed from a rider seated on the vehicle body (accordingly, Fig. 1 shows the left side of the motorcycle 12).

As shown in Fig. 1, the motorcycle 12 is provided with a front wheel 14 which is a steering wheel, a handlebar 16 that steers the front wheel 14, a body frame 18 that configures the vehicle body, a unit swing engine 20 which is a driving source, a rear wheel 22 which is a driving wheel, a seat 24 and others.

The front wheel 14 is provided in the front of the vehicle body and is rotatably journaled to a pair of front forks 28 extended from the side of a lower end of a steering shaft 26. A front fender 30 that covers the upside of the front wheel 14 is attached to the front forks 28. The handlebar 16 is coupled on the side of an upper end of the steering shaft 26 and its substantially intermediate part is turnably held by a head pipe 32 provided to the body frame 18.

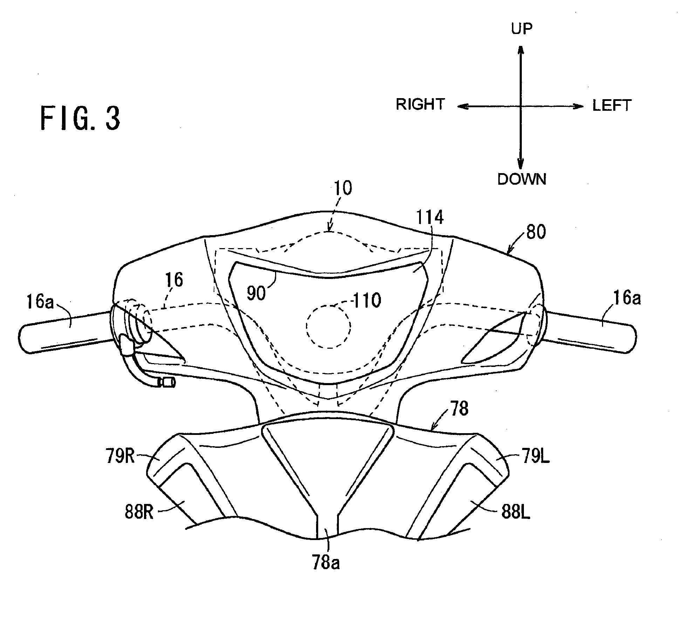

The handlebar 16 is extended symmetrically in a vehicle width direction with a part coupled to the steering shaft 26 in the center (see Fig. 3). A grip 16a for a rider to grasp is installed at both ends of the handlebar 16. The handlebar 16 changes the orientation of the front wheel 14 coupled via the steering shaft 26 and the front forks 28 by being operated by the rider.

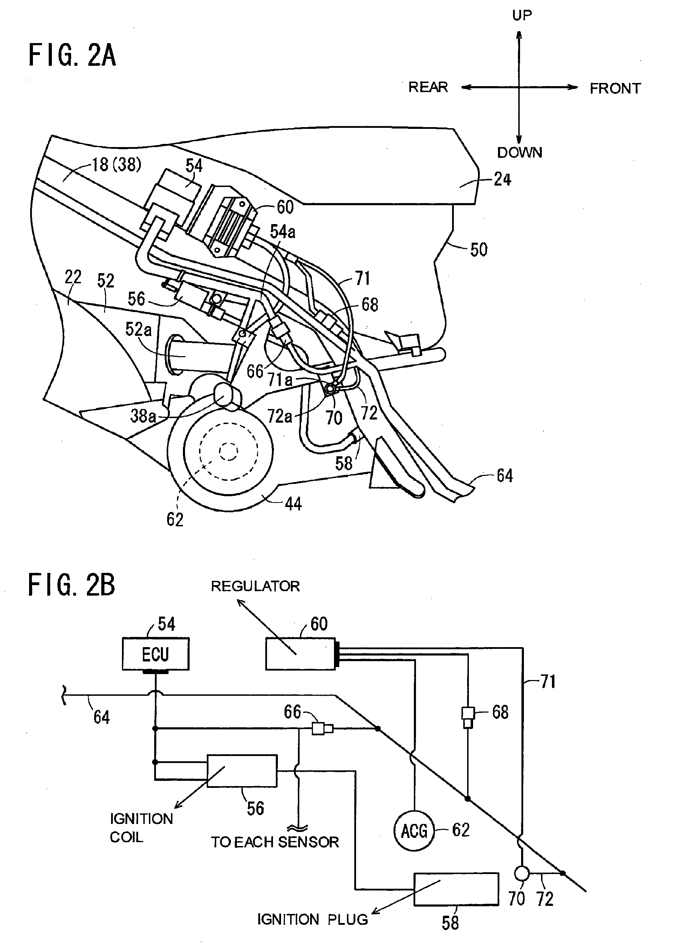

The body frame 18 is configured by a frame on the front side 36 extended downward and backward from the head pipe 32 to the bottom of the vehicle body, curved from the bottom of the vehicle body and extended to a supporting shaft 34 in a substantially intermediate part in a longitudinal direction of the vehicle body and a frame on the rear side 38 swingably journaled by the supporting shaft 34 and extended upward and backward in the vehicle body. In the substantially intermediate part in the longitudinal direction of the vehicle body, the unit swing engine 20 is vertically swingably supported by the body frame 18. Besides, a fuel tank 40 that supplies fuel (gasoline) to the unit swing engine 20 is held by the body frame 18 (the frame on the rear side 38) in the rear of the vehicle body. A step 38a for a pillion passenger seated at the back of the rider to put his/her foot is provided to a substantially intermediate part of the frame on the rear side 38 (see Fig. 2A).

The unit swing engine 20 is configured by a water-cooled engine 42 having a substantially horizontal cylinder axis and a belt-type continuously variable transmission 44 that continuously shifts the output of the engine 42 and transmits it to the rear wheel 22 by a transmitting belt (not shown) and a moving pulley (not shown). The continuously variable transmission 44 drives the moving pulley according to the operation of an electric motor for a shift (not shown) and continuously varies transmission gear ratio. A transmission case 44a covers an outside face of the continuously variable transmission 44.

The rear wheel 22 is rotatably journaled by a rear cushion 46 and a swing arm 48 at the back of the continuously variable transmission 44, is rotated because rotational driving force is transmitted from the continuously variable transmission 44, and propels the vehicle body as the driving wheel.

The seat 24 is provided from the substantially intermediate part in the longitudinal direction of the vehicle body to the rear side of the vehicle body. For the seat 24 in this embodiment, a so-called tandem seat configured by a front seat 24a for the rider to be seated and a rear seat 24b for the pillion passenger to be seated at the back of the front seat 24a is adopted. A housing box 50 housing articles is provided under the seat 24. The seat 24 also functions as a cover that covers the upside of the housing box 50 and its internal space is exposed by pulling up the seat 24 on the right side.

The fuel tank 40 is arranged at the back of the housing box 50 and an air cleaner 52 connected to a throttle body (not shown) via a connecting tube 52a (see Fig. 2A) is arranged on the downside of the housing box 50.

Further, various electric equipment that controls the driving of the unit swing engine 20 and others is mounted on the body frame 18 on the right side (that is, on the reverse side of the motorcycle 12 shown in Fig. 1) of the housing box 50 of the motorcycle 12.

Fig. 2A is an enlarged side view showing primary electric equipment in a state in which a body cover 76 of the motorcycle 12 shown in Fig. 1 is removed and Fig. 2B is a block diagram showing the connection of the electric equipment shown in Fig. 2A. As shown in Figs. 2A and 2B, the motorcycle 12 is provided with the electric equipment such as an engine control unit (ECU) 54, an ignition (IGN) coil 56, an ignition plug 58, a regulator 60, an AC generator (ACG) 62 and others.

The ECU 54 is provided with a control function that controls the driving of the unit swing engine 20 and is fixed to the body frame 18 on the upside of the unit swing engine 20. The ECU 54 is connected to a battery (not shown) via a main harness 64 and electric power required for control is supplied from the battery. A first coupler 66 the outside of which is formed by an insulating member and inside which electric conduction is made is used for connecting a connecting line 54a extended from the ECU 54 and the main harness 64.

Plural sensors (a TH sensor and an intake air temperature sensor (respectively not shown)) are directly connected to an input terminal of the ECU 54 without passing the main harness 64 and similarly, the ignition coil 56 and others are directly connected to an output terminal of the ECU without passing the main harness 64. The ECU 54 receives a signal from each sensor and controls the rotation of the engine 42 according to the received signal. In this case, the ECU 54 controls the ignition timing of the ignition plug 58 by controlling the output timing of high electric power (discharge plasma) output from the ignition coil 56 and can control the rotation of the engine 42.

In the meantime, the ACG 62 converts the rotation of a driven shaft to electrical energy and also functions as a generator that regeneratively charges the battery in addition to functioning as a motor in assisting the output of the unit swing engine 20. The ACG 62 is directly connected to the regulator 60 that stabilizes voltage without passing the main harness 64 and electric power is supplied from the battery or the battery is charged with electric power. A plus terminal of the regulator 60 is connected to the main harness 64 via a second coupler 68. A tip fitting 71a of an earth cable 71 connected to an earth terminal of the regulator 60 and a tip fitting 72a of an earth cable 72 connected to the main harness 64 are connected by being jointly fastened to a fixed terminal 70 formed on the body frame 18. The number of parts can be reduced by jointly fastening the tip fittings 71a, 72a to the fixed terminal 70 as described above.

It is desirable that the first and second couplers 66, 68 are provided with a waterproof mechanism to be also available in environment which is apt to be influenced by water from the outside. In this case, the first and second couplers 66, 68 are large-sized, however, the infiltration of water into the main harness 64 can be effectively prevented.

In a conventional type, plural sensors, the ACG 62 and others are connected to the main harness 64 via plural couplers in addition to the ECU 54, the regulator 60 and others. However, as described above, as the coupler is large-sized, it is difficult to arrange plural couplers and as a result, a problem that the wiring of each electric equipment including the main harness is intricate occurs.

In the meantime, in the motorcycle 12 according to this embodiment, only the two couplers (the first and second couplers 66, 68) are used. That is, the ECU 54 and the main harness 64 are connected by the first coupler 66, the regulator 60 and the main harness 64 are connected by the second coupler 68, the plural sensors heretofore connected to the main harness 64 are directly connected to the ECU 54 without passing the main harness 64, and the ACG 62 similarly connected to the main harness 64 is directly connected to the regulator 60 without passing the main harness 64.

Hereby, as the number of couplers used in the wiring of the electric equipment is limited to two, the couplers can be easily arranged and the wiring can be simplified. In addition, as the number of couplers is reduced, the cost can be also reduced. Besides, as the number of couplers is reduced and the coupler is provided with the waterproof mechanism, possibility that water infiltrates into the main harness 64 via the coupler can be greatly reduced.

As shown in Fig. 1, in the motorcycle 12, a main stand 74 is turnably supported by the body frame 18 under the unit swing engine 20. The main stand 74 is stored to be substantially parallel to a road surface in running, is stood to be substantially perpendicular to the road surface in parking, and the main stand stands the motorcycle 12 with the rear wheel 22 lifted.

In the motorcycle 12, a body cover 76 configuring a designed surface (the appearance) of the vehicle body in the longitudinal direction of the vehicle body is attached to the body frame 18, the steering shaft 26 and others. The body cover 76 is formed by polymeric materials such as acrylonitrile-butadiene styrene (ABS) resin, fiber reinforced plastics (FRP) and polypropylene (PP) and covers each part of the vehicle body such as the handlebar 16, the electric equipment, the front of the unit swing engine 20 and the fuel tank 40.

The body cover 76 in this embodiment is provided with a front cover 78 that covers the front of the steering shaft 26 and an upper part of the front wheel 14, a handlebar cover 80 that covers the handlebar 16 over the front cover 78, a floor center cover 82 that forms a step floor 82a at the back of the front cover 78, a body cover 84 arranged under the seat 24, connected to the floor center cover 82 and extended backward and a rear cover 86 connected to the rear of the body cover 84.

As shown in Fig. 3, the front cover 78 is configured by a center garnish 78a in the center and front side covers 79L, 79R laterally overhanged from the center garnish 78a. Besides, the front cover 78 is formed so that it is smoothly curved and is narrowed from each front side cover 79L, 79R toward the center garnish 78a so as to reduce air resistance applied to the vehicle body in running. Further, a pair of front blinkers 88L, 88R provided with a blinking direction indication function is arranged in the front side covers 79L, 79R.

The handlebar cover 80 covers an upper part of the steering shaft 26 and a central part of the handlebar 16 and a meter (for example, a speedometer, a tachometer and others) 80a is arranged on a top face of its rear (see Fig. 1). The handlebar cover 80 is formed so that the fine sight is matched with that of the front cover 78. An opening 90 is formed in the front of the handlebar cover 80 and the headlight 10 described later is attached into the opening 90.

As shown in Fig. 1, the step floor 82a is formed on the floor center cover 82 to be flat so that the rider can put his/her feet in running. The body cover 84 is extended upward and backward from the floor center cover 82 and each part is prevented from being exposed to the outside by covering the front of the unit swing engine 20, the electric equipment, the housing box 50 and others respectively arranged under the seat 24.

The rear cover 86 covers the fuel tank 40 and others in the rear of the vehicle body and a rear fender 92 which covers the rear wheel 22 from the back and on which a license plate and others are arranged is attached to a lower part of the rear cover. A tail lamp 94 and a pair of rear blinkers 96L, 96R are arranged at the back of the rear cover 86. The tail lamp 94 is lit and is put out when the rider operates a brake. In the meantime, the pair of rear blinkers 96L, 96R is provided with the direction indication function that the front blinker 88L and the rear blinker 96L in the same direction (on the left side) are blinked and the front blinker 88R and the rear blinker 96R in the same direction (on the right side) are blinked.

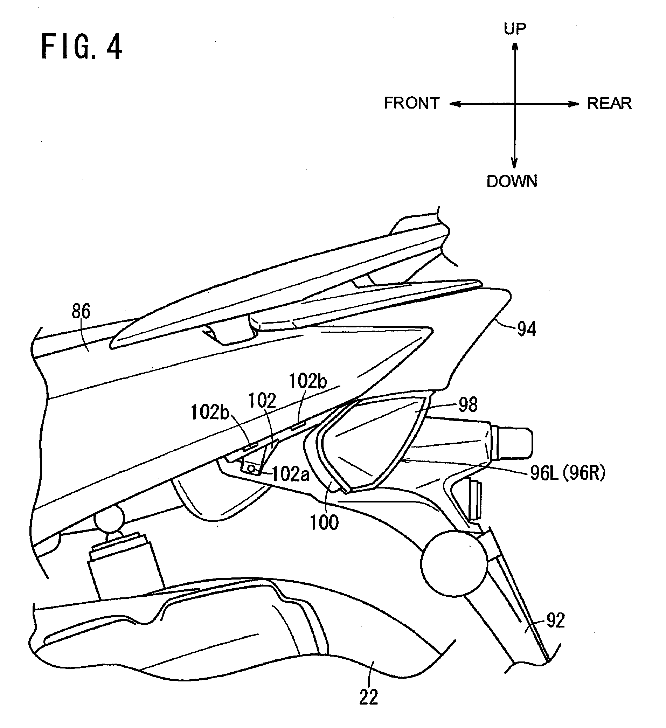

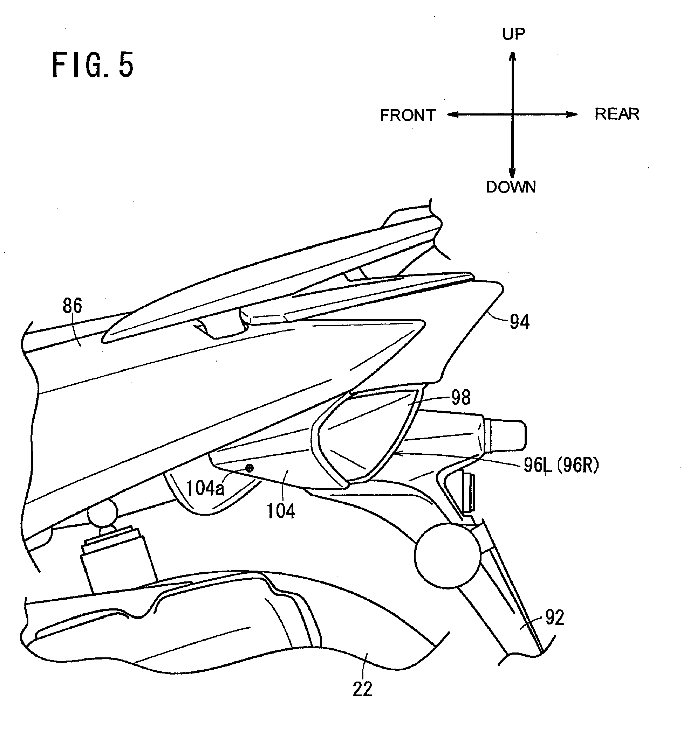

Figs. 4 and 5 are side views in which each rear main part of the motorcycle 12 shown in Fig. 1 is enlarged. As shown in Fig. 4, the rear blinkers 96L, 96R in this embodiment are provided with a blinking lamp (not shown) inside and is provided with a base 100 to which a rear blinker lens 98 is attached in the rear. An upper part of the base 100 of each rear blinker 96L, 96R is provided to a predetermined position of a lower part of the tail lamp 94 and each rear blinker is fixed by attaching the base 100 to the rear fender 92.

A mounting boss 102 in which a tapped hole 102a for a blinker cover is bored is provided to the rear cover 86 located in front of each rear blinker 96L, 96R. Further, in an upper part of the mounting boss 102, a fitting hole 102b for the blinker cover to insert a fitting pawl (not shown) of the blinker cover 104 and position the blinker cover 104 is bored.

As shown in Fig. 5, the blinker cover 104 is screwed to the tapped hole 102a for the blinker cover of the mounting boss 102 by a fitting screw 104a. A top face of the front of the blinker cover 104 is abutted on the rear cover 86 in the vicinity of the mounting boss 102, the rear of the blinker cover is extended in a direction in which each rear blinker 96L, 96R is arranged, and the blinker cover covers a part in which the base 100 and the rear blinker lens 98 are abutted. That is, in a state in which the blinker cover 104 is screwed and fixed to the mounting boss 102, the appearance is formed in a substantially fusiform shape by the rear blinker lens 98 and the blinker cover 104 and hereby, the fine sight of the whole rear blinkers 96L, 96R is enhanced. Besides, the blinker cover 104 can effectively prevent water from infiltrating into the rear blinkers 96L, 96R from clearance between the rear blinker lens 98 and the base 100 (from the part in which they are abutted).

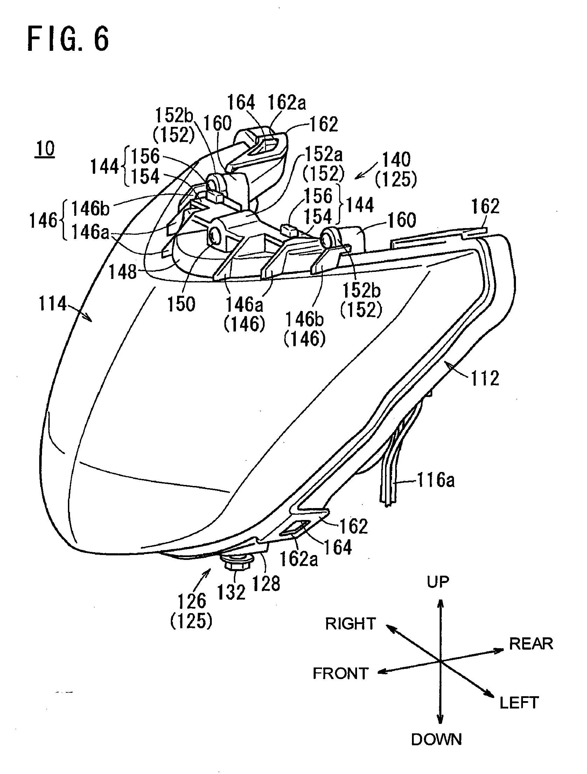

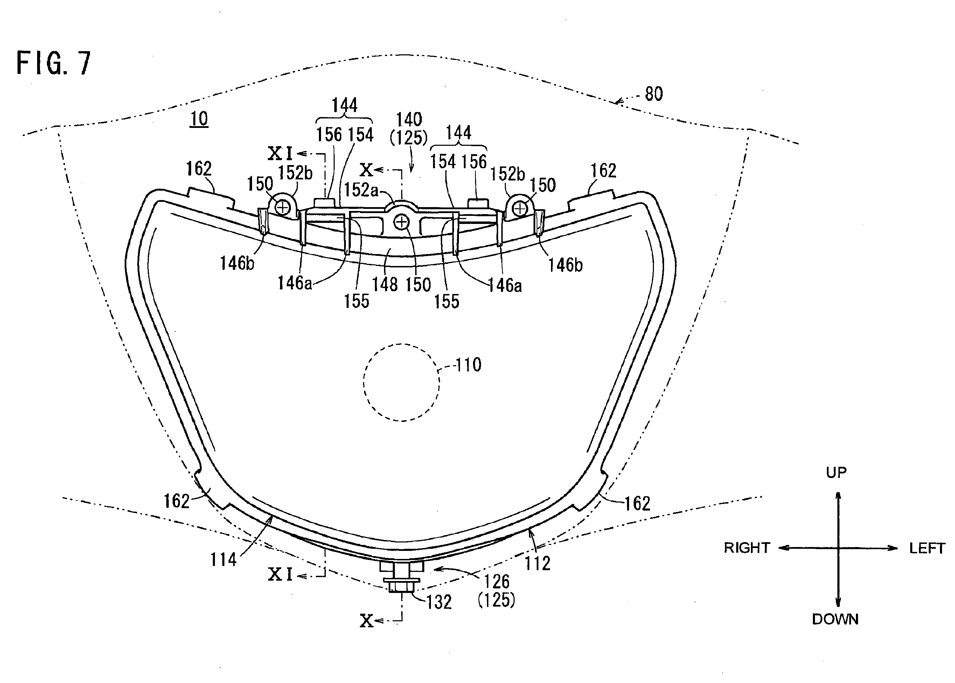

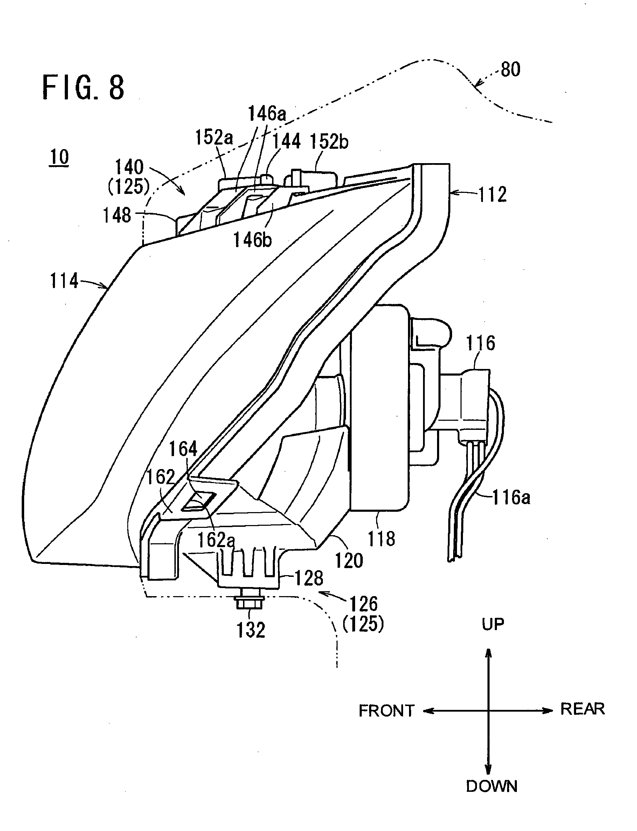

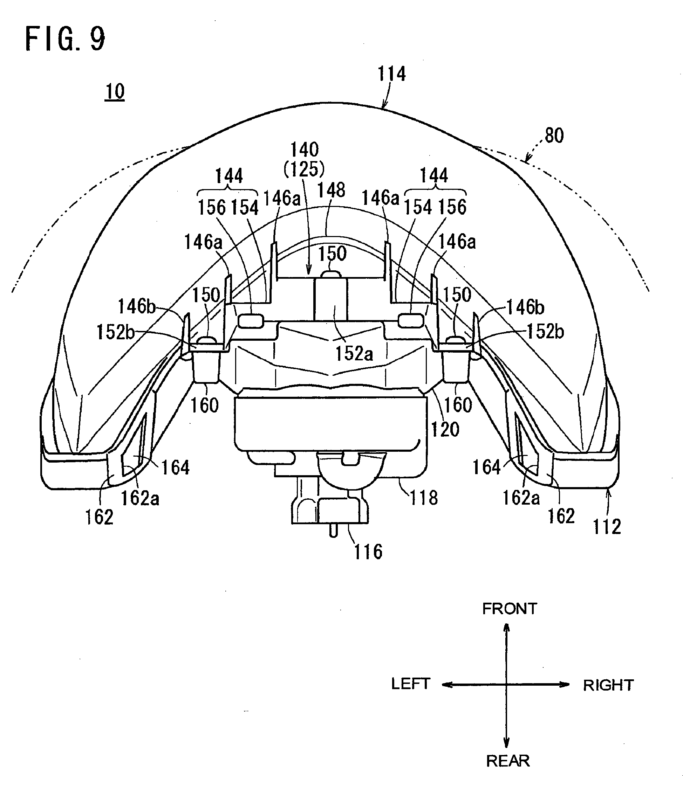

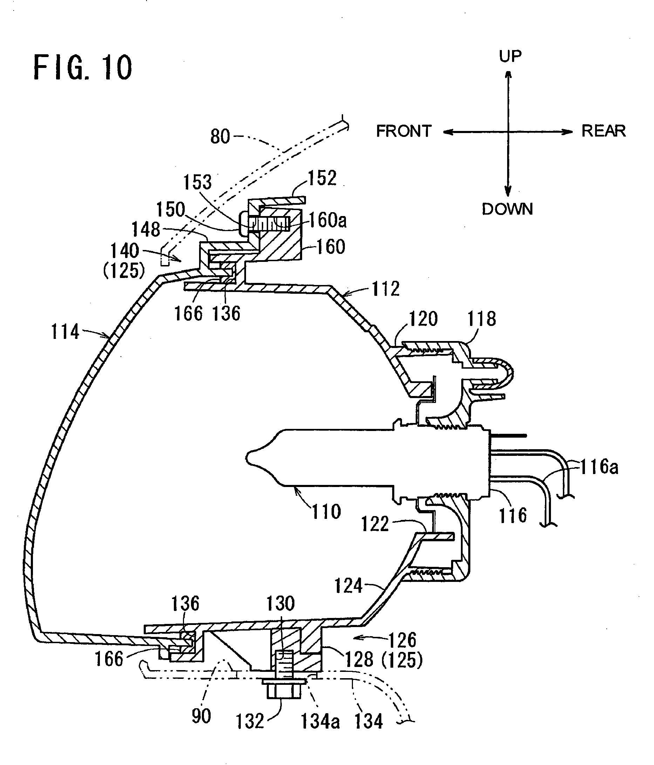

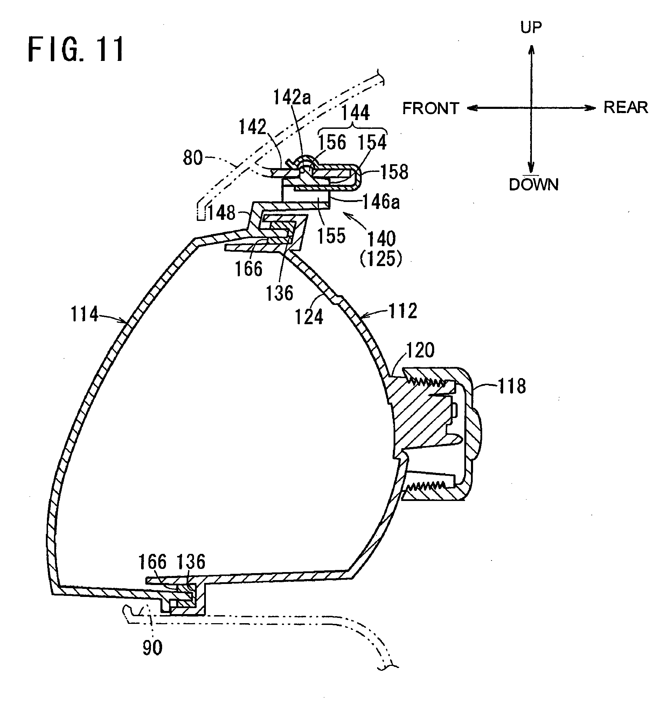

Fig. 6 is a perspective view showing the whole configuration of the headlight in this embodiment, Fig. 7 is a front view showing the headlight shown in Fig. 6, Fig. 8 is a side view showing the headlight shown in Fig. 6, and Fig. 9 is a top view showing the headlight shown in Fig. 6. Fig. 10 is a sectional view viewed along a line X-X in Fig. 7 showing a state in which the headlight is attached to the opening of the handlebar cover and Fig. 11 is a sectional view viewed along a line XI-XI in Fig. 7 showing a state in which the headlight is inserted into the opening of the handlebar cover.

As shown in Figs. 6 to 11, the headlight 10 in this embodiment is configured as a headlight unit including a bulb (a light source) 110, a base member 112 and a lens 114. The headlight 10 is attached to the opening 90 of the handlebar cover 80 after it is assembled by each part.

The bulb 110 of the headlight 10 emits irradiating light by electric power supply from the battery. The bulb 110 has only to be an emitter that emits the sufficient quantity of light and for example, a tungsten halogen lamp, a light emitting diode (LED) or an electroluminescent lamp (an EL lamp) and others can be applied. The headlight 10 in addition to the bulb 110 may be also provided to a position light. As shown in Fig. 10, a socket part 116 is provided on the side of the base of the bulb 110 and a conductor 116a joined to the socket part 116 is connected to the battery. The socket part 116 of the bulb 110 is screwed to an insulating cover 118 and the bulb is mounted on the base member 112 via the insulating cover 118.

The base member 112 of the headlight 10 is molded by synthetic resin resistant to the rise of temperature produced by irradiating light emitted from the bulb 110. For such synthetic resin, bulk molding compound (BMC) resin and others can be adopted. Generally, the BMC resin is comparatively low-priced and as the deflection temperature is 200 degrees, it is high temperature and a rate of the molding shrinkage is zero, the BMC resin can be easily molded in a predetermined shape and is suitable for molding the base member 112.

The base member 112 is formed in a substantially concave shape in which the front is open and the rear is curved, as shown in Fig. 7, left and right both ends of the base member are made wider toward the upside from the downside in a front view, and as shown in Fig. 8, the left and right both ends are extended upward and backward in a side view. Besides, as shown in Fig. 10, a mounting part 120 male threaded is provided to an outside face of the rear and a bulb hole 122 is bored in the center of the rear. The insulating cover 118 is screwed to the male screw of the mounting part 120. In a state in which the insulating cover 118 is mounted on the base member 112, the bulb 110 is inserted from the bulb hole 122 and hereby, the bulb 110 is held with the bulb protruded inside the base member 112.

A reflector 124 that reflects irradiating light emitted from the bulb 110 in front is formed on an inside face of the base member 112. The reflector 124 is formed by making aluminum in a thin film adhere to a surface (the inside face) of the base member 112 and the formation is executed in an aluminum deposition process.

An optical axis adjusting part 126 as an optical axis adjusting mechanism 125 that enables adjusting an optical axis of the headlight 10 is provided to a central position in a lateral direction of a lower part of the base member 112. A lower part of the headlight 10 and a lower part on the downside of the opening 90 of the handlebar cover 80 are attached by locking the optical axis adjusting part 126 to a fitting part 134 provided to the lower part on the downside of the opening 90 of the handlebar cover 80. The optical axis adjusting part 126 is configured by a base for adjusting the optical axis 128 which is integrated with the base member 112, a round hole 130 bored at the bottom of the base for adjusting the optical axis 128 and an aiming bolt 132 screwed to this round hole 130. In the meantime, a long hole 134a extended in the longitudinal direction is formed in a position corresponding to the round hole 130 of the optical axis adjusting part 126 in the fitting part 134 of the handlebar cover 80. The optical axis adjusting part 126 and the fitting part 134 are mutually locked by inserting the aiming bolt 132 into the long hole 134a and screwing the aiming bolt 132 to the round hole 130.

The optical axis adjusting part 126 is provided with an aiming function that adjusts an optical axis of irradiating light by changing an angle at which the headlight 10 is attached to the vehicle body in collaboration with a pivot 140 of the lens 114 described later. That is, when the optical axis of the headlight 10 is adjusted, an inclination of the headlight 10 is varied by varying a position in which the aiming bolt 132 and the round hole 130 are fastened with respect to the long hole 134a and as a result, the optical axis of the headlight 10 can be adjusted.

Further, a joining groove 136 is formed on an end face around the opening in the front of the base member 112 and when the lens 114 and the base member 112 are joined, the rear of the lens 114 is fitted into the joining groove 136.

As shown in Fig. 10, the lens 114 of the headlight 10 is fitted to the front of the base member 112 and transmits irradiating light from the bulb 110 and the reflector 124. The lens 114 is formed by synthetic resin the transparency of which is high, and its front is formed in the shape of a substantially round-summit hemisphere pushed forward with the front gently curved from the upside toward the downside and pushed forward with the front gently curved from each side in a lateral direction toward the center. The lens 114 forms an exterior in front of the handlebar 16 together with the handlebar cover 80 in a state in which the headlight 10 is attached to the opening 90 of the handlebar cover 80 (see Fig. 3).

The pivot 140 as the optical axis adjusting mechanism 125 is formed in a central position of an upper part of the lens 114. The pivot 140 forms a state in which an upper part of the headlight 10 and an upper part of the opening 90 of the handlebar cover 80 are attached by being locked with a supporting part 142 provided on the upside of the opening 90 of the handlebar cover 80 as shown in Fig. 11. The pivot 140, as shown in Figs. 7 to 9, includes a protrusion locking part 144 locked with the supporting part 142, a reinforcing wall 146 that supports both ends in a lateral direction (in the vehicle width direction) of the protrusion locking part 144, a stepped part 148 protruded upward from the upper part of the lens 114 by fixed height and a base member fastening part 152 to which a fastening screw (a fastening member) 150 that fastens the lens 114 and the base member 112 is screwed.

A pair of protrusion locking parts 144is symmetrically placed with respect to the center in the lateral direction of the lens 114 with fixed intervals as shown in Fig. 7. Each of the pair of protrusion locking parts 144 is configured by a bridging part 154 that couples upper parts of the reinforcing walls 146 and a protruded piece 156 erected on a top face of the bridging part 154. The bridging part 154 bridges a pair of reinforcing walls 146 with fixed thickness and supports the protruded piece 156 in a substantially intermediate part in a longitudinal direction and in a lateral direction of the top face (see Fig. 9). Hereby, clearance 155 is formed under the bridging part 154. The protruded piece 156 is protruded in the shape of a rectangle in an outside in the vehicle width direction on the bridging part 154.

An insertion hole 142a into which the protruded piece 156 is inserted is formed in the supporting part 142 on the upside of the opening 90 of the handlebar cover 80 as shown in Fig. 11. In the state in which the headlight 10 and the handlebar cover 80 are attached, the protrusion locking part 144 is supported by inserting the protruded piece 156 into the insertion hole 142a and holding the bridging part 154 and the supporting part 142 by a clip 158. Hereby, an upper part of the pivot 140 is locked with the supporting part 142 of the handlebar cover 80.

As for the reinforcing wall 146, as shown in Fig. 6, each pair (hereinafter called first reinforcing walls 146a) is provided at both ends of each of the two protrusion locking parts 144 and a pair (hereinafter called second reinforcing walls 146b) is provided at a leftmost end and at a rightmost end of the pivot 140. That is, in the pivot 140, a total of six reinforcing walls 146 are provided. Each reinforcing wall 146 is extended in the longitudinal direction and particularly, the first reinforcing wall 146a that supports each of the two protrusion locking parts 144 is formed backward from the front side of the protrusion locking part 144 in a top view. Hereby, the protrusion locking part 144 is securely supported by the first reinforcing walls 146a, when, for example, vertical vibration is transmitted from the vehicle body, the vibration transmitted to the headlight 10 can be also effectively inhibited by the protrusion locking part 144 and the first reinforcing walls 146a, and the durability of the headlight 10 can be further enhanced.

The stepped part 148 is protruded by fixed height between the second reinforcing walls 146b of the pivot 140 in a front view as shown in Fig. 7. Each reinforcing wall 146 is formed such that its top face and the front cross the stepped part 148. As described above, the rigidity of the reinforcing wall 146 can be enhanced by forming the stepped part 148 and the reinforcing wall 146, and the protrusion locking part 144 can be firmly supported. The base member fastening part 152 is formed on the upside of the stepped part 148 (see Fig. 6).

The base member fastening part 152 is provided in three locations: in the center in a lateral direction and at both ends in the lateral direction on the upside of the stepped part 148. As shown in Fig. 9, the base member fastening part in the center (hereinafter called the first base member fastening part) 152a is located in front of the pair of protrusion locking parts 144 and the base member fastening parts at both ends (hereinafter called the second base member fastening parts) 152b are located at the back of the pair of protrusion locking parts 144. The first base member fastening part 152a is protruded in a semicylindrical shape from the stepped part 148, is extended in a longitudinal direction (in an axial direction), and a fastening hole 153 (see Fig. 10) screwing the fastening screw 150 is formed in the center of the axis. The second base member fastening part 152b is formed as a plate piece protruded upward in a semicircular shape and a fastening hole not shown screwing the fastening screw 150 is formed in the center.

In the meantime, each coupling part 160 is provided in a position opposite to each base member fastening part 152 in an upper part of the base member 112 and a female screw 160a (see Fig. 10) is formed in a position opposite to each fastening hole 153 in each coupling part 160. In the assembly of the headlight 10, the lens 114 and the base member 112 are fastened by inserting the fastening screw 150 into each fastening hole 153 of each base member fastening part 152 from a front direction and screwing the fastening screw to the female screw 160a of the base member 112.

The headlight 10 is configured as described above and next, the assembly of the headlight 10 will be described.

When the headlight 10 is assembled, the bulb 110 is attached to the base member 112 via the insulating cover 118 as shown in Fig. 10 and the rear of the lens 114 is fitted into the joining groove 136 of the base member 112. Plural positioning parts 162 provided with each positioning hole 162a are extended backward in each side peripheral part in the upper part and in a lower part of the lens 114 and a positioning pawl 164 is formed in a position corresponding to the positioning part 162 on the peripheral side of the base member 112 (see Fig. 6). In a state in which the lens 114 is fitted to the base member 112, a state in which the lens 114 and the base member 112 are fitted is held by fitting the positioning pawl 164 into the positioning hole 162a.

The lens 114 and the base member 112 are joined by executing a thermal welding process in the state in which the lens 114 and the base member 112 are fitted. As shown in Fig. 10, thermal welding flux 166 is injected into the joining groove 136 beforehand and the lens 114 can be joined to the base member 112 by hardening the thermal welding flux 166 after a location in which the lens 114 and the base member 112 are fitted is heated.

Further, in this embodiment, the upper part of the lens 114 and the upper part of the base member 112 are firmly coupled by screwing the fastening hole 153 of the base member fastening part 152 and the female screw 160a of the coupling part 160 using the fastening screw 150 as described above in addition to the joining by thermal welding of the lens 114 and the base member 112.

Next, a method of attaching the headlight 10 in this embodiment to the opening 90 of the handlebar cover 80 and the adjustment of the optical axis of the headlight 10 will be described.

As shown in Fig. 11, when the headlight 10 is attached to the opening 90 of the handlebar cover 80, the assembled headlight 10 is inserted into the opening 90 and the protruded piece 156 erected on the lens 114 is inserted into the insertion hole 142a formed in the supporting part 142 of the handlebar cover 80. Hereby, the supporting part 142 and the bridging part 154 are overlapped and a state in which the protruded piece 156 is slightly protruded from the insertion hole 142a is realized.

Afterward, a part in which the supporting part 142 and the bridging part 154 are overlapped is held by the clip 158 from the rear side, the protruded piece 156 is prevented from falling out of the insertion hole 142a by holding the overlapped part by the clip 158, and the protrusion locking part 144 and the supporting part 142 can be locked with each other. Hereby, the upper part of the headlight 10 is supported by the upper part on the upside of the opening 90 of the handlebar cover 80.

As shown in Fig. 10, in a state in which the protrusion locking part 144 is locked, the aiming bolt 132 is inserted into the long hole 134a of the fitting part 134 from the downside of the handlebar cover 80 and is fastened to the round hole 130 of the optical axis adjusting part 126. Hereby, the lower part of the headlight 10 can be fixed to the lower part on the downside of the opening 90 of the handlebar cover 80. According to the above-mentioned procedure, the upper and the lower parts of the headlight 10 are firmly locked with the opening 90 of the handlebar cover 80 and the attachment of the headlight 10 is completed.

When the optical axis of the headlight 10 is adjusted, the aiming bolt 132 is loosened and the side of the lower part of the headlight 10 can be moved in the longitudinal direction. At this time, the upper part of the headlight 10 is kept in a state in which the protrusion locking part 144 is locked with the supporting part 142. Accordingly, as the protrusion locking part 144 functions as a base point of a mounting angle, the whole headlight 10 is turned when the base member 112 is displaced in the longitudinal direction. As for the adjustment of the optical axis of the headlight 10, the optical axis of the headlight 10 is adjusted upward by moving the position in which the aiming bolt 132 is fastened to the long hole 134a forward and the optical axis of the headlight 10 is adjusted downward by moving the position in which the aiming bolt 132 is fastened backward. At this time, a load is applied to the protrusion locking part 144 by the turning of the headlight 10, however, as the protrusion locking part 144 is supported by the first reinforcing walls 146a, the load can be dispersed into the protrusion locking part 144 and the first reinforcing walls 146a. That is, the pivot 140 is provided with sufficient durability when the optical axis of the headlight 10 is adjusted.

When the optical axis of the headlight 10 is adjusted, turning force may act on the upper part of the lens 114 supported by the supporting part 142 in a direction in which the upper part of the base member 112 is separated because of the protrusion locking part 144. In this embodiment, however, as the lens 114 and the base member 112 are fastened by the fastening screw 150, they are prevented from being separated. Hereby, even if a load is applied in a direction in which the lens 114 and the base member 112 are separated by the turning of the headlight 10, the fastening screw 150 can prevent the lens 114 and the base member 112 from being separated.

Particularly, in this embodiment, the first base member fastening part 152a is formed in an intermediate part in the vehicle width direction in the vicinity of the pair of protrusion locking parts 144 and in front of the protrusion locking parts 144, and each second base member fastening part 152b is formed outside in the vehicle width direction in the vicinity of the pair of protrusion locking parts 144 and at the back of the protrusion locking parts 144. Therefore, as each base member fastening part 152 is fastened by the fastening screw 150, a load in the direction in which the lens 114 and the base member 112 are separated is dispersed in each fastened location and the separation of the lens 114 and the base member 112 can be more securely prevented.

In a state in which the headlight 10 is attached to the handlebar cover 80, since the protrusion locking part 144 and the supporting part 142 are fixed and the optical axis adjusting part 126 and the fitting part 134 are fixed, the headlight 10 can be fixed with strong locking force from a vertical direction (from the pivot 140 and the optical axis adjusting part 126).

In the headlight 10 according to this invention, as the optical axis adjusting part 126 is formed in the base member 112 and the pivot 140 is formed in the lens 114, a load (including locking force applied from the vertical direction, vibration, shock from the vehicle body and others) applied to the headlight 10 can be dispersed and a load applied to the base member 112 and the lens 114 can be reduced.

In the conventional headlight (for example, in the patent literature 1), as the pivot 140 and the optical axis adjusting part 126 are provided to the base member 112, high-priced material is used to give sufficient rigidity in forming the base member. However, in the headlight 10 according to this embodiment, as a load applied to the headlight 10 is dispersed in the base member 112 and the lens 114 as described above, a load applied to the base member 112 is reduced. As a result, the securement of the durability and the rigidity of the headlight is facilitated and as the durability of the headlight can be secured even if, for example, the base member is made of low-priced material which is not provided with sufficient rigidity, the manufacturing cost of the headlight can be reduced.

Besides, when both the optical axis adjusting part 126 and the pivot 140 are formed in the base member 112, an intricate and time-consuming process is required to enhance the precision in forming of the base member 112 and working efficiency in manufacturing the headlight 10 is deteriorated. In the meantime, according to this embodiment, as only the optical axis adjusting part 126 is formed in the base member 112, the formation of the base member 112 is facilitated, compared with a case where the optical axis adjusting part 126 and the pivot 140 are formed in the base member 112, the working efficiency in manufacturing the headlight 10 is enhanced, and the manufacturing cost can be more reduced.

Further, when the headlight 10 is viewed from the front side in a state in which the headlight 10 is attached to the handlebar cover 80, the lens 114 located in front can effectively conceal the base member 112 located at the back because the pivot 140 is formed in the lens 114, and even if clearance between the headlight 10 and the body cover 76 is increased by turning the headlight to adjust the optical axis, the base member 112 can be prevented from being viewed via clearance between the headlight 10 and the handlebar cover 80 so as to prevent fine sight from being damaged.

Furthermore, in this embodiment, the upper part and the front of each first reinforcing wall 146a located inside the pair of protrusion locking parts 144 and the side of the first base member fastening part 152a are coupled by synthetic resin having fixed thickness. Hereby, even if stress such as vibration and shock in the lateral direction are applied from the vehicle body in the state in which the headlight 10 is attached to the handlebar cover 80, stress applied to the protrusion locking part 144 and the reinforcing wall 146 can be also dispersed into the first base member fastening part 152. Accordingly, the attachment of the headlight 10 and the handlebar cover 80 can be kept more stable.

This invention is not limited to the embodiment and it need scarcely be said that various configurations without deviation from the object of this invention can be adopted.

| | |
|---|---|
| 10 | Headlight |
| 12 | Motorcycle |
| 14 | Front wheel |
| 16 | Handlebar |
| 18 | Body frame |
| 20 | Unit swing engine |
| 22 | Rear wheel |
| 24 | Seat |
| 110 | Bulb (Light source) |
| 112 | Base member |
| 114 | Lens |
| 126 | Optical axis adjusting part |
| 140 | Pivot |
| 144 | Protrusion locking part |
| 146 | Reinforcing wall |
| 148 | Stepped part |
| 150 | Fastening screw |
| 152 | Base member fastening part |

## Claims

1. A headlight (10) mounting mechanism for mounting a headlight (10) to a vehicle body comprising:
a light source (110);
a base member (112) equipped with a reflector (124) that reflects irradiating light from the light source (110); and
a lens (114) which is installed in front of the base member (112) and which transmits the irradiating light,
wherein the headlight (10) is provided with an optical axis adjusting mechanism (126) including:
an optical axis adjusting part (126) which is provided to either one of the base member (112) or the lens (114) and which adjusts an optical axis of irradiating light transmitted in the lens (114) by changing a mounting angle at which the base member (112) and the lens (114) are attached to the vehicle body; and
a pivot (140), which functions as a base point of the mounting angle when the optical axis is adjusted,
**characterized in that** the pivot is provided to the other one of the base member (112) or the lens (114).

2. The headlight (10) mounting mechanism according to Claim 1,
wherein:
- the vehicle body is provided with a body cover (76) having an opening (90) in its front, a supporting part (142) and a fitting part (134)
- the lens (114) is made to face the front via the opening (90)
- the pivot (140) is provided to the lens (114) and is locked with the supporting part (142)
- the optical axis adjusting part (126) is provided to the base member (112) and is locked with the fitting part (134).

3. The headlight (10) mounting mechanism according to Claim 2, wherein the pivot (140) is provided with a protrusion locking part (144) locked with the supporting part (142), and a reinforcing wall (146) is formed on both sides in a vehicle width direction of the protrusion locking part (144).

4. The headlight (10) mounting mechanism according to Claim 3, wherein the reinforcing wall (146) is formed from the front side to the rear side of the protrusion locking part (144) in a top view.

5. The headlight (10) mounting mechanism according to Claim 3 or 4,
wherein: the protrusion locking part (144) is formed on a stepped part (148) protruded upward from the lens (114); and
the reinforcing wall (146) is formed to cross a top face and the front of the stepped part (148).

6. The headlight (10) mounting mechanism according to Claim 5, wherein a fastening member (150) that fastens the base member (112) and the lens (114) is provided to each upper part of the base member (112) and the lens (114).

7. The headlight (10) mounting mechanism according to Claim 6, wherein the fastening member (150) fastens the base member (112) and the lens (114) in the vicinity of both sides in the vehicle width direction of the protrusion locking part (144).

8. The headlight (10) mounting mechanism according to Claim 6, wherein, the at least one fastening member (150) comprises a plurality of fastening members (150), and the plurality of fastening members fasten at least two locations on the front side and on the rear side of the protrusion locking part (144).

9. The headlight (10) mounting mechanism according to any of Claims 3 to 5, wherein:
- the protrusion locking part (144) is provided with a bridging part (154) that couples upper parts of the two reinforcing walls (146) and a protruded piece (156) erected on the bridging part (154); and
- the protruded piece (156) is inserted into an insertion hole (142a) formed in the supporting part (142) in a state in which the pivot (140) and the supporting part (142) are locked with each other and a part in which the bridging part (154) and the supporting part (142) are overlapped is held by a clip (158).

## Patentansprüche

1. Scheinwerfer (10)-Befestigungsmechanismus zum Befestigen eines Scheinwerfers (10) an einem Fahrzeugaufbau, aufweisend:
eine Lichtquelle (110);
ein Grundteil (112), das mit einem Reflektor (124), der ausstrahlendes Licht von der Lichtquelle (110) reflektiert, ausgerüstet ist; und
eine Linse (114), die vor dem Grundteil (112) installiert ist und die das ausstrahlende Licht transmittiert,
wobei der Scheinwerfer (10) mit einem Optische-Achse-Einstellmechanismus (126) versehen ist, der umfasset:
ein Optische-Achse-Einstellteil (126), das entweder an dem Grundteil (112) oder der Linse (114) vorgesehen ist und das eine optische Achse des ausstrahlenden Lichts, das von der Linse (114) transmittiert wird, einstellt, durch Ändern eines Befestigungswinkels, mit dem das Grundteil (112) und die Linse (114) an dem Fahrzeugrahmen angebracht sind;
und
ein Gelenk (140), die als ein Basispunkt des Befestigungswinkels wirkt, wenn die optische Achse eingestellt wird,
**dadurch gekennzeichnet, dass**
das Gelenk (140) an dem anderen des Grundteils (112) oder der Linse (114) vorgesehen ist.

2. Scheinwerfer (10)-Befestigungsmechanismus gemäß Anspruch 1,
wobei:
der Fahrzeugaufbau mit einer Aufbauabdeckung (76) versehen ist, die eine Öffnung (90) in ihrer Front, ein Tragteil (142) und ein Anpassungsteil (134) hat,
die Linse (114) der Front über die Öffnung (90) zugewandt gemacht ist, das Gelenk (140) an der Linse (114) vorgesehen und mit dem Tragteil (142) arretiert ist,
das Optische-Achse-Einstellteil (126) an dem Grundteil (112) vorgesehen ist und an dem Anpassungsteil (134) arretiert ist.

3. Scheinwerfer (10)-Befestigungsmechanismus gemäß Anspruch 2,
wobei das Gelenk (140) mit einem arretierendem Vorsprungsteil (144) versehen ist, das an dem Tragteil (142) arretiert ist und eine verstärkte Wand (156) auf beiden Seiten in einer Fahrzeugbreitenrichtung des arretierenden Vorsprungsteils (144) gebildet ist.

4. Scheinwerfer (10)-Befestigungsmechanismus gemäß Anspruch 3,
wobei die verstärkte Wand (146) von der Frontseite zu der Rückseite des arretierenden Vorsprungsteils (144) in einer Draufsicht gebildet ist.

5. Scheinwerfer (10)-Befestigungsmechanismus gemäß Anspruch 3 oder 4, wobei:
das arretierende Vorsprungsteil (144) auf einem gestuften Teil (148) gebildet ist, das von der Linse (114) aufwärts hervorsteht; und
die verstärkte Wand (146) so gebildet ist, dass sie eine obere Fläche und die Front des gestuften Teils (148) kreuzt.

6. Scheinwerfer (10)-Befestigungsmechanismus gemäß Anspruch 5,
wobei ein Befestigungselement (150), das das Grundteil (112) und die Linse (114) befestigt, an jedem oberen Teil des Grundteils (112) und der Linse (114) vorgesehen ist.

7. Scheinwerfer (10)-Befestigungsmechanismus gemäß Anspruch 6,
wobei das Befestigungselement (150) das Grundteil (112) und die Linse (114) in der Fahrzeugbreitenrichtung in der Nähe von beiden Seiten des arretierenden Vorsprungsteils (144) befestigt.

8. Scheinwerfer (10)-Befestigungsmechanismus gemäß Anspruch 6,
wobei das wenigstens eine Befestigungselement (150) eine Mehrzahl von Befestigungselementen (150) umfasst, und die Mehrzahl von Befestigungselementen wenigstens zwei Stellen an der Vorderseite oder der Rückseite des arretierenden Vorsprungsteils (144) befestigt.

9. Scheinwerfer (10)-Befestigungsmechanismus gemäß einem der Ansprüche 3 bis 5, wobei:
- das arretierende Vorsprungsteil (144) mit einem Brückenteil (154) versehen ist, das obere Teile der verstärkten Wände (146) verbindet, und mit einem vorspringenden Teil (56) versehen ist, dass auf dem Brückenteil (154) aufgerichtet ist; und
- das vorspringende Teil (156) in ein Einfügeloch (142a) eingesetzt ist, das in dem Tragteil (142) in einen Zustand, in dem das Gelenk (140) und das Tragteil (142) miteinander arretiert sind, eingesetzt ist und ein Teil in dem das Brückenteil (154) und das Tragteil (142) sich überlappen, ist durch einen Clip (158) gehalten.

## Revendications

1. Mécanisme de montage de phare (10) permettant de monter un phare (10) sur une carrosserie de véhicule, comprenant :
une source de lumière (110) ;
un organe de base (112) équipé d'un réflecteur (124) qui réfléchit la lumière irradiante provenant de la source de lumière (110) ; et
une lentille (114) qui est installée devant l'organe de base (112) et qui transmet la lumière irradiante,
dans lequel le phare (10) est pourvu d'un mécanisme de réglage d'axe optique (126) incluant :
une partie de réglage d'axe optique (126) qui est disposé sur l'un ou l'autre de l'organe de base (112) ou de la lentille (114) et qui règle un axe optique de lumière irradiante transmise dans la lentille (114) en modifiant un angle de montage au niveau duquel l'organe de base (112) et la lentille (114) sont fixés à la carrosserie de véhicule ; et
un pivot (140) qui fonctionne comme un point de base de l'angle de montage lorsque l'axe optique est réglé, **caractérisé en ce que** le pivot est disposé sur l'autre de l'organe de base (112) ou de la lentille (114).

2. Mécanisme de montage de phare (10) selon la revendication 1, dans lequel :
- la carrosserie de véhicule est pourvue d'un carter de corps (76) comportant une ouverture (90) à l'avant, une partie de support (142) et une partie d'installation (134),
- la lentille (114) est fabriquée pour faire face à l'avant via l'ouverture (90),
- le pivot (140) est disposé sur la lentille (114) et est verrouillé avec la partie de support (142),
- la partie de réglage d'axe optique (126) est disposée sur l'organe de base (112) et est verrouillée avec la partie d'installation (134).

3. Mécanisme de montage de phare (10) selon la revendication 2, dans lequel le pivot (140) est pourvu d'une partie de verrouillage de protubérance (144) verrouillée avec la partie de support (142), et une paroi de renfort (146) est formée sur les deux côtés dans un sens de largeur de véhicule de la partie de verrouillage de protubérance (144).

4. Mécanisme de montage de phare (10) selon la revendication 3, dans lequel la paroi de renfort (146) est formée du côté avant au côté arrière de la partie de verrouillage de protubérance (144) en vue de dessus.

5. Mécanisme de montage de phare (10) selon la revendication 3 ou 4,
dans lequel : la partie de verrouillage de protubérance (144) est formée sur une partie étagée (148) protubérante vers le haut depuis la lentille (114) ; et
la paroi de renfort (146) est formée pour croiser une face de dessus et l'avant de la partie étagée (148).

6. Mécanisme de montage de phare (10) selon la revendication 5, dans lequel un organe de fixation (150) qui fixe l'organe de base (112) et la lentille (114) est disposé sur chaque partie supérieure de l'organe de base (112) et de la lentille (114).

7. Mécanisme de montage de phare (10) selon la revendication 6, dans lequel l'organe de fixation (150) fixe l'organe de base (112) et la lentille (114) à proximité des deux côtés dans le sens de largeur de véhicule de la partie de verrouillage de protubérance (144).

8. Mécanisme de montage de phare (10) selon la revendication 6, dans lequel le au moins un organe de fixation (150) comprend une pluralité d'organes de fixation (150), et la pluralité d'organes de fixation fixe au moins deux emplacements sur le côté avant et sur le côté arrière de la partie de verrouillage de protubérance (144).

9. Mécanisme de montage de phare (10) selon l'une quelconque des revendications 3 à 5, dans lequel :
- la partie de verrouillage de protubérance (144) est pourvue d'une partie de pontage (154) qui couple des parties supérieures des deux parois de renfort (146) et une pièce protubérante (156) élevée sur la partie de pontage (154) ; et
- la pièce protubérante (156) est insérée dans un trou d'insertion (142a) formé dans la partie de support (142) dans un état dans lequel le pivot (140) et la partie de support (142) sont verrouillés l'un avec l'autre et une partie dans laquelle la partie de pontage (154) et la partie de support (142) sont chevauchées est maintenue par une attache (158).
